# EUROPÄISCHE PATENTSCHRIFT

(11) **EP 0 998 728 B1**
(45) Veröffentlichungstag und Bekanntmachung des Hinweises auf die Patenterteilung: **02.10.2002**
(21) Anmeldenummer: 98945117.4
(22) Anmeldetag: 30.07.1998
(51) Int. Cl.: G06T 5/20

(54) **VERFAHREN ZUR BILDSCHÄRFEVERBESSERUNG DIGITALISIERTER BILDER**
METHOD FOR IMPROVING THE DEFINITION OF DIGITAL IMAGES
PROCEDE POUR AMELIORER LA NETTETE D'IMAGES NUMERISEES

(30) Priorität: 30.07.1997 DE 19732773
(43) Veröffentlichungstag der Anmeldung: 10.05.2000
(73) Patentinhaber: Donner, Wilfried, 33615 Bielefeld (DE)
(72) Erfinder: DONNER, Wilfried, D-33615 Bielefeld (DE); WÖHLER, Christian, D-89233 Neu-Ulm (DE)
(74) Vertreter: Hanewinkel, Lorenz, Dipl.-Phys.
(86) Internationale Anmeldenummer: EP9804759
(87) Internationale Veröffentlichungsnummer: WO99006954

(56) Entgegenhaltungen:
- WO-A-95/08815
- US-A- 4 945 502
- US-A- 4 970 593

## Beschreibung

Die Erfindung betrifft ein Verfahren zur Verbesserung der Bildschärfe eines digitalisierten Bildes, dessen Bildelemente reihen- und spaltenförmig als eine Ausgangsmatrix A_{xy} organisiert gespeicherte Lichtintensitätswerte sind, wobei jeweils ein Matrixausschnitt Aᵢⱼ von 2ⁿ mal 2^{m} Elementen durch Spiegelung an zwei seiner benachbarten.Kanten und der von diesen eingeschlossenen Ecke auf 2ⁿ⁺¹ mal 2^{m+1} Elemente erweitert wird und dieser einer Fourier-Transformation unterzogen wird und die dabei erzeugte transformierte Matrix Bᵢⱼ, 1 ≤ i ≤ 2ⁿ⁺¹, 1 ≤ j ≤ 2^{m+1}, durch eine elementenweise Multiplikation mit einer Bildfehlerkorrekturmatrix Cᵢⱼ (alle Elemente reell) in eine korrigierte transformierte Matrix B'ᵢⱼ überführt wird und diese in eine Intensitätsmatrix A'ᵢⱼ zurücktransformiert wird, von der ein Kernausschnitt in eine korrigierte Intensitätsmatrix A'_{xy} entsprechend der Position des Matrixausschnittes Aᵢⱼ zentriert eingestellt wird und dann jeweils um eine Kantenlänge des Kernausschnittes versetzt ein Matrixausschnitt nach dem anderen in dieser Weise bearbeitet wird, bis eine vollständige korrigiert Intensitätsmatrix A'_{xy} vorliegt.

Ein derartiges Verfahren ist aus Ohm, J.-R.: Digitale Bildcodierung, Springer 1995, S. 33/34, 56/57, bekannt. Diese Bearbeitung lokaler Matrizenbereiche unter Einbeziehung einer gespiegelten Umgebung reduziert die Entstehung von Randstörungen in den Bildbereichen und erbringt eine beschleunigte Bearbeitung der Gesamtmatrize.

Weiterhin ist es aus Wahl, F.M.: Digitale Bildsignalverarbeitung, Springer 1984, bekannt eine Bildverarbeitung im Ortsfrequenzbereich nur für ortsinvariante Systeme vorzusehen. Für Bildgewinnungssysteme mit ortsvarianten Eigenschaften, z.B. örtlich sich änderndem Auflösungsvermögen, sollen Ortsfrequenzverzerrungen von Bildsignalen mit ortsvarianten Filtern teilweise kompensiert werden. Bei diesen ist das Ortfrequenzübertragungsverhalten eine Funktion der Ortskoordinaten. Für jeden Bildpunkt müßte deshalb ein geeigneter Filterkoeffizientensatz bestimmt werden, jedoch wird zur Aufwandsreduzierung das ortsvariante Filter nur aus wenigen bildbereichsweisen Filtern zusammengesetzt.

Es ist weiterhin bekannt, die gespeicherten Lichtintensitätswerte der einzelnen Pixel eines Bildes durch eine Summierung eines Grundhelligkeitswertes und/oder durch eine Spreizung oder Normierung des Wertebereiches in seinem Kontrast zu verändern, wobei diese Modifikationen auch für verschiedene Farbbildkomponenten, die als getrennte Wertefelder gespeichert sind, getrennt vornehmbar sind. Hierdurch läßt sich der optische Eindruck eines mit derartig modifizierten Bilddaten erzeugten Bildes verbessern, eine Beseitigung von Abbildungsunschärfen des Ausgangsbildes ist damit jedoch nicht möglich.

Es ist Aufgabe der Erfindung, ein leistungsfähigs Verfahren zur Bildschärfeverbesserung bezüglich Abbildungsfehlern eines Objektivs zu schaffen.

Die Lösung besteht darin, daß die Bildfehlerkorrekturmatrix jeweils ortsabhängig geeignet bestimmt wird, indem ortsabhängige Bildfehlerkorrekturmatrizen aus einer MTF-Korrekturfunktion, d.h. modulation-transfer-funktion-Korrekturfunktion, passend zu gegebenen MTF-Größen eines zur Abbildung des digitalisierten Bildes benutzten Objektives bestimmt werden und diese lokalen Bildfehlerkorrekurmatrizen jeweils als Untermenge der Bildfehlerkorrekturmatrix entsprechend der Lage des zugehörigen Matrixausschnittes bezüglich der Lage eines Bildkreismittelpunktes und des Abstandes und des tangentialen und radialen Winkels der Matrixausschnittkanten zu diesem ausgewählt werden.

Vorteilhafte Ausgestaltungen enthalten die Unteransprüche.

Ist das Objektiv und der Maßstab der Abbildung bekannt, so läßt sich aus den MTF-Modulationstabellen des Objektives die tangentiale und radiale Frequenztreue gemäß der Lage im Bildkreis entnehmen. Der Korrekturfaktor für die einzelnen Frequenzen ergibt sich jeweils als der Kehrwert des sogenannten Modulationsgrades im jeweiligen Bildkreis und zwar in radialer und tangentialer Richtung zu diesem.

Sind die Objektivdaten oder die Daten der Aufnahme unbekannt, so werden nach einer Ausgestaltung des Verfahrens einzelne markante Bildausschnitte ausgewählt und deren Bearbeitungsparameter variiert, bis eine gewünscht optimale Schärfung erreicht ist. Die gesamte Korrekturmatrix läßt sich dann aus einer parametrisierten Korrekturfunktion durch Anfitten ableiten. Eine Funktion, die sich bewährt hat, ist weiter unten beschrieben.
Das neuartige Verfahren arbeitet im Frequenzraum, wobei jeweils aus der Umgebung eines kleinen Bildausschnittes die Frequenzinformation für die Erarbeitung der lokalen Werte hinzugezogen wird. Um eine durch Randbedingungen ungestörte Bearbeitung der einzelnen Bildausschnitt zu gewährleisten, werden dessen Matrixwerte dreifach in verschiedene Richtungen gespiegelt, so daß eine in beiden Richtungen doppelt so große völlig symmetrische Matrix vorliegt. Das Spektrum einer solchen Matrix ist frei von Randstörungen.

Das gesamte digitale Bild wird in dieser Weise nach und nach aufbereitet, und die Matrixwerte der einzelnen Ausschnitte werden durch eine elementweise Multiplikation mit einem lokalen Korrekturmatrixausschnitt überarbeitet. Eine Untermenge der einzelnen Ergebnismatrix wird dann jeweils als Kernausschnitt in eine Ergebnismatrix in den Intensitätsbereich rücktransformiert bis diese aus solchen komplett zusammengesetzt ist. Der Kernausschnitt, der nach der Rücktransformation genutzt wird, ist vorzugsweise eine Untermenge entsprechend (2ⁿ - k₁) mal (2^{m} - k₂); 0 < k₁, k₂ < 2ⁿ, 2^{m} Elementen des ursprünglichen Matrixausschnittes Aᵢⱼ , und demgemäß sind seine Kantenlängen 2ⁿ - k₁ oder 2^{m} - k₂ , um die die Kernausschnitte versetzt aneinandergereiht werden.
Danach können noch die bekannten Modifikationen der Elemente im Amplitudenraum nach Wunsch vorgenommen werden.

Die eigentliche Schärfung der Konturen tritt durch die Bearbeitung im Frequenzraum auf, indem die hohen Frequenzanteile jeweils in dem Maß angehoben werden, wie sie bei der Abbildung an dem betreffenden Bildort abgefallen waren.

In einer weiteren Ausgestaltung des Verfahrens wird eine Korrekturfunktion für die radialen und die tangentialen Bildkomponenten aus der MTF-Tabelle des Objektivs abgeleitet. Unter Berücksichtigung der jeweiligen Lage der Kante der Matrix-Untermenge zum Bildkreis wird dann die zugehörige Korrekturfunktion aus dem radialen und tangentialen Korrekturfunktionswerte der beiden Korrekturfunktionen durch eine Interpolation errechnet.

Die Bearbeitungszeit eines Bildes ist sehr stark von der Größe der gewählten Matrixausschnitte abhängig. Andererseits ist die erreichbare Schärfeverbesserung um so größer, je größer der Ausschnitt ist, wobei jedoch eine erhebliche Vergrößerung nur noch wenig bringt. Eine zu geringe Anzahl von Matrixelementen hat dagegen eine Verstärkung des statistischen Rauschens zu Folge, so daß auf einer an sich matten Fläche "Kümmel und Salz" hervorgehoben werden, indem z.B. das Korn eines reproduzierten Photos oder die Siebstruktur eines reproduzierten Druckes unerwünscht hervortritt. Ein Bildausschnitt von 8 mal 8 oder 16 mal 16 Elementen, von dem letztlich ein Kern von 4 mal 4 bzw. 8 mal 8 geschärften Elementen genutzt wird, hat sich als praxisgerecht erwiesen.

Da die kleiner als die Ausschnitte gewählten Kernbereiche am Bildrand nicht bis zum ursprünglichen Bildrand reichen, können dort die nach der Kernentnahme übrigen rücktransformierten Bildelementwerte genutzt werden, um den Randbereich aufzufüllen. Alternativ kann vor den Transformationen eine Spiegelung von einer oder mehreren Reihen der ursprünglichen Matrixelemente um die Bildkante vorgenommen werden und so eine etwas größere Ausgangsmatrix geschaffen werden, so daß dann die aneinandergesetzten Kernbereiche die ganze ursprüngliche Matrixgröße abdecken, wobei der gespiegelte Randbereich entfällt und nicht besetzt wird.

Eine Weiterentwicklung des Verfahrens besteht darin, daß dann, wenn mehrere farblich aufgeteilte Bildwertematrizen gegeben sind, diese getrennt und, soweit bekannt, noch mit den für die jeweilige Farbe zutreffenden Korrekturfunktionen korrigiert werden. Außerdem werden danach vorteilhaft die einzelnen Farbbildmatrizen durch eine radiale Streckung oder Stauchung im Bildkreis auf ein zueinander passendes Format gebracht, wobei die unterschiedlichen Abbildungsmaßstäbe des Objektivs für die einzelnen Farben kompensiert werden. Hierdurch werden unschöne Farbsäume entlang der scharf ausgebildeten Kanten beseitigt.

Falls die Farbfehler der Abbildungsvorrichtung nicht bekannt sind, lassen diese sich durch eine Analyse von Farb-Intensitätswertverläufen an ausgewählten Bildausschnitten, insbes. solchen die tangentiale Kanten am Bildkreis enthalten, bestimmen, indem die Verschiebung der Übergänge der durch die Bearbeitung geschärften Kanten in den einzelnen Farbbildmatrizen zueinander ermittelt werden und aus den Verschiebungen in Bezug auf deren Lage im Bildkreis dann jeweils das Maß der Streckung oder Stauchung bestimmt wird, der die jeweilige Ergebnismatrize dann unterworfen wird.

Somit lassen sich mit dem Verfahren und seinen Ausgestaltungen sowohl solche Bilder, die mit unbekannten Objektiven und mit Unschärfen aufgenommen sind, bezüglich der Abbildungsfehler verschiedener Art, insbesondere in Bezug auf ihre Schärfe und Farbfehler, nach einer Digitalisierung korrigieren.

Eine für das ganze Bild passende Korrekturfunktion läßt sich durch eine Ausschnittbearbeitung durch schrittweise Näherung ermitteln oder aus den MTF-Kennwerten des Objektivs und den Abbildungsparametern bestimmen, wenn diese bekannt sind. Hierbei sind i.e. zu berücksichtigen, der Ort im Bildkreis, d.h. der Abstand des Elementes in der Bildebene von der optischen Achse des abbildenden Objektivs, die Richtung radial oder tangential oder im Winkel zum Bildkreis, die die nacheinander zu bearbeitenden Bildelemente bzw. Matrixelemente haben, das Öffnungsverhältnis, die Neigung der Bildebene zur Objektivachse und ggf. die Farbe.

Das Verfahren wird anhand der Figuren 1 bis 5 veranschaulicht.
- Fig. 1: zeigt den Matrixausschnitt in gespiegelter Form,
- Fig. 2: zeigt die Struktur des transformierten Matrixausschnittes,
- Fig. 3: zeigt eine MTF-Fuktinsdarstellung eines Objektivs,
- Fig. 4A, 4B: zeigen Funktionen aus Fig. 3,
- Fig. 5A,: 5B zeigen Korrekturfunktionen dazu.

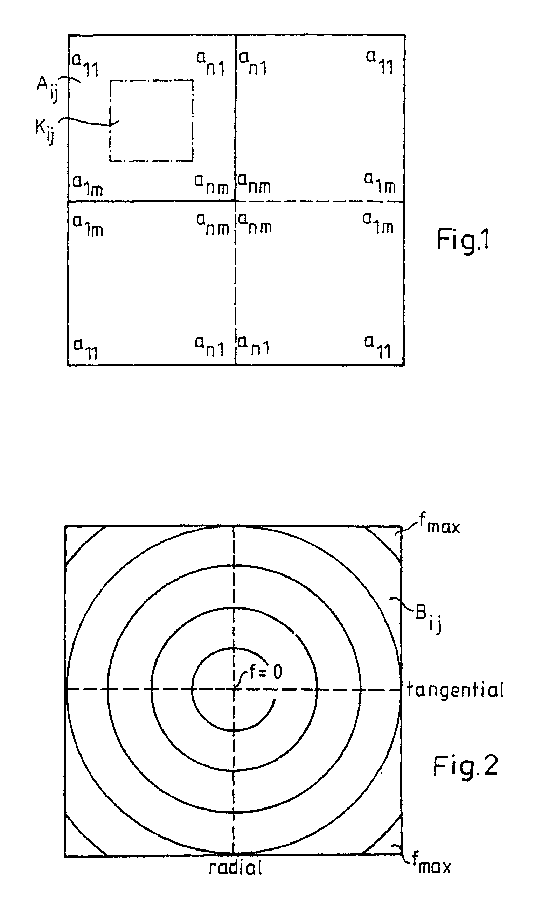

Ausgangsdaten des Verfahrens ist ein Datenfeld digitalisierter Helligkeits- oder Farbintensitätswerte, die eine Ausgangsmatrix A_{xy} bilden. Aus dieser wird jeweils eine Untermenge Aᵢⱼ, 1 ≤ i ≤ 2ₙ, 1 ≤ j ≤ 2^{m}, herausgegriffen wobei n und m vorzugsweise 3 oder 4 sind und im allgemeinen beide gleich groß sind, so daß die Untermenge 8 mal 8 oder 16 mal 16 Elemente umfaßt. Diese so komplettiete Matrix wird gemäß Fig. 1 über zwei aneinanderanstoßende Kanten und die Stoßecke gespiegelt, so daß jedes Element vierfach vorhanden ist; die Eckelemente a₁₁, a₁ₘ, aₙ₁, aₙₘ sind jeweils bezeichnet.

Im ersten Verfahrensschritt wird zu dieser erweiterten Matrizen die Fouriertransformierte Bᵢⱼ gebildet, die ebenfalls aus 2ⁿ⁺¹ mal 2^{m+1} Elementen besteht. Die Intensitätsverteilungen der Ortsfrequenzen f in tangentialer und in radialer Richtung sowie in den Zwischenrichtungen sind in den Zeilen bzw. Spalten der Matrix dargestellt, wobei die Ortsfrequenz f in der Mitte Null ist, und die maximale Ortsfrequenz fmax in den Matrizenecken vorliegt.

Diese so gebildete Transformierte Bᵢⱼ wird nun mit einer lokalen Korrekturmatrize Cᵢⱼ elementweise multipliziert, die Teil einer Gesamtkorrekturmatrix C_{xy} ist, so daß die korrigierte transformierte Matrix B'ᵢⱼ entsteht.

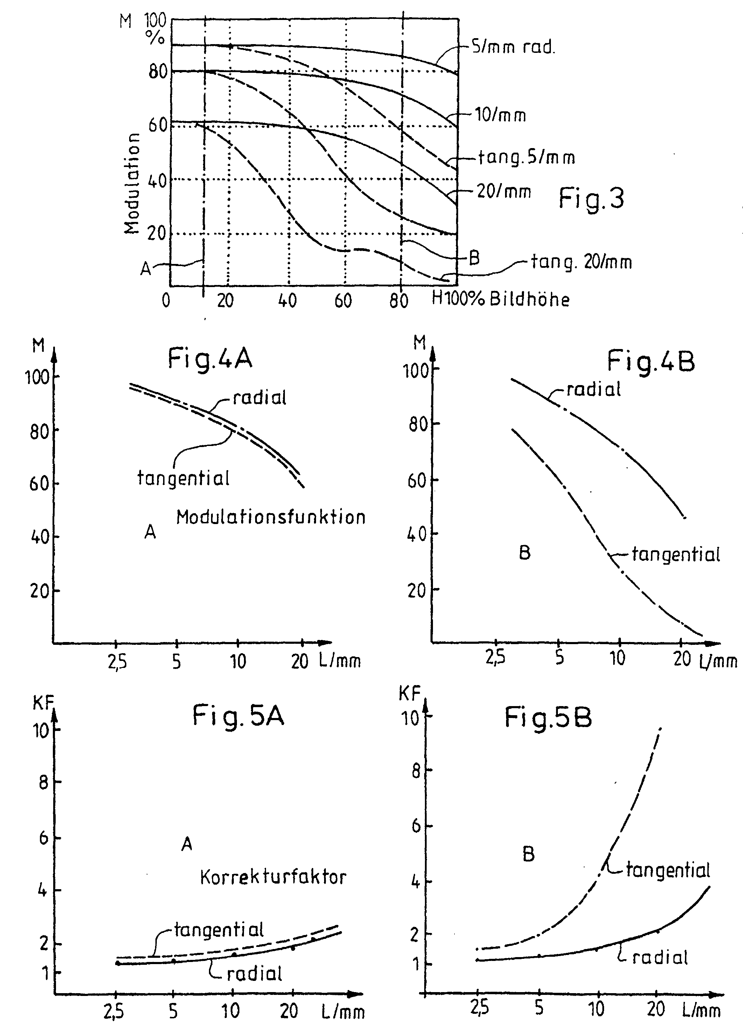

Im Beispiel ist gemäß Fig. 3 die MTF eines Objektivs für die Abbildung bekannt, die digitalisiert worden ist. Die relative Modulation ist abhängig von der relativen Bildhöhe im Bildkreis dargestellt, wobei die Liniendichten, die die Frequenz repräsentieren, mit den Parametern 5/mm; 10/mm und 20/mm angegeben sind, und zwar getrennt für die radiale und tangentiale Richtung; letztere sind gestrichelt dargestellt.

In Figur 4A und 4B sind aus der Figur 3 beispielhaft für die Bildhöhen von 10% bzw. 80% die Modulationsfunktionen über die Liniendichte herausgezogen dargestellt.

In Figur 5A und 5B sind die jeweils zu den gezeigten Modulationsfunktionen passenden Korrekturfunktionen dargestellt. Die Korrekturfaktoren sind zur Modulation jeweils invers. Dieses Beispiel zeigt, wie aus den Informationen der Figur 3 durch eine geeignete Wahl einer funktionalen Interpolation für sämtliche Bildbereiche die Korrekturfaktoren zu bestimmen sind, die letztlich die Gesamtkorrekturmatrize bilden.

Bei der Rücktransformation der korrigierten Matrize B'ᵢⱼ in den Amplitudenraum entsteht die korrigierte Matrize A'ᵢⱼ, aus der jeweils aus einem der Quadranten ein Kernbereich Kᵢⱼ entnommen wird, der gewöhnlich kleiner als der Quadrant ist und vorzugsweise 2ⁿ - k₁ mal 2^{m} - k₂ Elemente umfaßt, wobei 0 < k₁, k₂ < 2ⁿ, 2^{m} ist. Vorzugsweise sind k₁, k₂ = 1 gewählt.

Die Bildfehlerkorrekturmatrix C_{xy} wird beispielsweise aus einer MTF-Korrekturfunktion eines zur Abbildung des digitalisierten Bildes benutzten Objektives bestimmt, und die lokalen Bildfehlerkorrekurmatrizen Cᵢⱼ werden jeweils als Untermenge derselben entsprechend der Lage des zugehörigen Matrixausschnittes Aᵢⱼ bezüglich der Lage eines Bildkreismittelpunktes und des Abstandes und des tangentialen und radialen Winkels der Matrixausschnittkanten zu diesem ausgewählt.

Eine Variante des Verfahrens besteht darin, daß die MTF-Korrekturfunktion eines Objektivs empirisch bestimmt wird nach dem Ansatz c(f) = 1 + af^{b}; a, b > 0, wobei f die Ortsfrequenz ist und a und b Parameter sind, die passend zu gegebenen MTF-Größen eines Objektivtyps, einer Blendeneinstellung, einem Abstand vom Bildkreismittelpunkt und der Richtung tangential/radial angefittet werden, wobei die korrigierte Amplitude Acorr(f) einer bestimmten Ortsfrequenz f aus der ursprünglichen Amplitude Ao(f) durch Multiplikation mit der Korrekturfunktion c(f) bestimmt wird.

Bei einer bevorzugten Verfahrensvariante wird die MTF-Korrekturfunktion c(f) mit radialen Parametern aᵣ, bᵣ und tangentialen Parametern aₜ, bₜ aus zugehörigen Größen des

Objektivs für eine Matrixkantenrichtung z, die einen Winkel β mit der tangentialen Richtung t bildet, ermittelt, wobei die Korrekturfunktion abhängig von der Ortsfrequenz f und dem Winkel β gemäß c(f,β) = cₜ(f) + (cᵣ(f) - cₜ(f)) · sin² β als Summe aus dem tangentialen Korrekturfunktionswert cₜ(f) und dem Produkt der Differenz des radialen und des tangentialen Korrekturfunktionswert cᵣ(f), cₜ(f) mit dem Quadrat des Sinus des Winkels β bestimmt wird, womit man die winkelgerecht korrigierte Amplitude Acorr (f,β) = Ao(f,β) · c(f,β) durch Multiplikation der ursprünglichen Amplitude Ao(f,ß) mit der Korrekturfunktion c(f,β) erhält.

Eine weitere Variante des Verfahrens besteht darin, daß die MTF-Korrekturfunktion nach dem Ansatz k(f) = (1 + af)^{v} ; a, v > 0 bestimmt wird, wobei f die Ortsfrequenz ist und die Parameter a und v durch ein Anfitten an die MTF-Größen eines vorgegebenen Objektivs bestimmt werden oder als frei gewählte Werte schrittweise optimiert werden.

Bei Farbbildern, deren digitalisierte Bildelemente durch mehrere Ausgangsmatrizen A_{xy} verschiedener Farben-Intensitätswerte bestimmt sind, werden diese bevorzugt getrennt entsprechend den einzelnen Farben zugehörigen Korrekturfunktionen korrigiert.

Die korrigierten Farb-Intensitätswerte-Matrizen A'_{xy} werden dann vorteilhaft entsprechend unterschiedlicher Farbabbildungsmaßstäben einer diese korrigiertenden radialen Streckung oder Stauchung bezüglich eines Bildkreismittelpunktes unterzogen. Dabei werden jeweils entsprechend dem Maß der Überlappungen der Pixel des Zielbilfeldes mit den Pixeln des Quellbildfeldes die Intensitätswerte der einzelnen zugehörigen Matrixelemente zu den neuen Matrixelementen des Zielbildfeldes addiert.

Sind die Farbbildverzerrungen des Objektivs, mit dem das Bild erstellt wurde, nicht bekannt, so werden die unterschiedlichen Farbabbildungsmaßstäbe aus Teilbereichen der korrigierten Matrizen A'_{xy} durch Bestimmung der Abweichung der radialen Lagen von tangentialen Kanten repräsentierenden Farbintensitätssprüngen in den verschiedenen Farbmatrizen zueinander und bezogen auf den Abstand des untersuchten Teilbereiches zum Bildkreismittelpunkt jeweils ermittelt.

Nicht nur in den Fällen, in denen die Objektiv-MTF-Daten und die Aufnahmedaten im einzelnen bekannt sind, ist eine Bildschärfekorrektur vorzunehmen, sondern auch nachträglich läßt sich ein beliebiges unscharfes Bild, auch wenn es durch Defokussierung oder Verwackeln unscharf oder mit Farbfehlern aufgenommen wurde, korrigiert werden kann, indem die Korrekturfunktion anhand einer Parameteroptimierung, inbesondere durch eine Bearbeitung von kleinen Bildausschnitten und deren Beurteilung, ermittelt wird, wobei die Beurteilung durch einen subjektiven Beobachter oder automatisch durch eine schrittweise Maximierung eines Schärfekriteriums erfolgt. Die üblichen elektronischen oder photografischen Mittel zur Farbgewichtung, zur Kontrastveränderung und zur Beeinflussung der Grundhelligkeit sind davon unabhängig, bevorzugt vorab, einzusetzen.

## Patentansprüche

1. Verfahren zur Verbesserung der Bildschärfe eines digitalisierten Bildes, dessen Bildelemente reihen- und spaltenförmig als eine Ausgangsmatrix A_{xy} organisiert gespeicherte Lichtintensitätswerte sind, wobei jeweils ein Matrixausschnitt Aᵢⱼ von 2ⁿ mal 2^{m} Elementen durch Spiegelung an zwei seiner benachbarten Kanten und der von diesen eingeschlossenen Ecke auf 2ⁿ⁺¹ mal 2^{m+1} Elemente erweitert wird und dieser einer Fourier-Transformation unterzogen wird und die dabei erzeugte transformierte Matrix Bᵢⱼ, 1 ≤ i ≤ 2ⁿ⁺¹, 1 ≤ j ≤ 2^{m+1}, durch eine elementenweise Multiplikation mit einer Bildfehlerkorrekturmatrix Cᵢⱼ, alle Elemente reell, in eine korrigierte transformierte Matrix B'ᵢⱼ überführt wird und diese in eine Intensitätsmatrix A'ᵢⱼ zurücktransformiert wird, von der ein Kernausschnitt in eine korrigierte Intensitätsmatrix A'_{xy} entsprechend der Position des Matrixausschnittes Aᵢⱼ zentriert eingestellt wird und dann jeweils um eine Kantenlänge des Kernausschnittes versetzt ein Matrixausschnitt nach dem anderen in dieser Weise bearbeitet wird, bis eine vollständige korrigierte Intensitätsmatrix A'_{xy} vorliegt, **dadurch gekennzeichnet, daß** die Bildfehlerkorrekturmatrix jeweils ortsabhängig bestimmt wird, indem eine ortsabhängige Bildfehlerkorrekturmatrix C_{xy} aus einer MTF-Korrekturfunktion passend zu gegebenen MTF-Größen eines zur Abbildung des digitalisierten Bildes benutzten Objektives bestimmt wird und die lokalen Bildfehlerkorrekturmatrizen Cᵢⱼ jeweils als Untermenge der Bildfehlerkorrekturmatrix C_{xy} entsprechend der Lage des zugehörigen Matrixausschnittes Aᵢⱼ bezüglich der Lage eines Bildkreismittelpunktes und des Abstandes und des tangentialen und radialen Winkels der Matrixausschnittkanten zu diesem ausgewählt werden.

2. Verfahren nach Anspruch 1, **dadurch gekennzeichnet, daß** der Kernausschnitt einer Untermenge von (2ⁿ - k₁) mal (2^{m} - k₂); 0 < k₁, k₂ < 2ⁿ, 2^{m} Elementen des ursprünglichen Matrixausschnittes Aᵢⱼ entspricht und somit die Kernausschnitte um eine Kantenlänge von 2ₙ - k₁ oder 2^{m} - k₂ versetzt aneinandergefügt werden.

3. Verfahren nach einem der vorstehenden Ansprüche, **dadurch gekennzeichnet, daß** der Kernbereich 2ⁿ⁻¹ mal 2^{m-1} Elemente hat.

4. Verfahren nach Anspruch 1, **dadurch gekennzeichnet, daß** die MTF-Korrekturfunktion nach dem Ansatz c(f) = 1 + af^{b}; a, b > 0 bestimmt wird, wobei f die Ortsfrequenz ist und a und b Parameter sind, die passend zu gegebenen MTF-Größen eines Objektivtyps, einer Blendeneinstellung, einem Abstand vom Bildkreismittelpunkt und der Richtung tangential/radial angefittet werden, wobei jeweils die korrigierte Amplitude Acorr(f) einer bestimmten Ortsfrequenz f aus der ursprünglichen Amplitute Ao(f) durch Multiplikation mit der Korrekturfunktion c(f) bestimmt wird.

5. Verfahren nach Anspruch 4, **dadurch gekennzeichnet, daß** als die MTF-Korrekturfunktion c(f) mit radialen Parametern aᵣ, bᵣ und tangentialen Parametern aₜ, bₜ aus zugehörigen Größen des Objektivs für eine Matrixkantenrichtung z, die einen Winkel β mit der tangentialen Richtung t bildet, bestimmt wird, wobei sich die Korrekturfunktion abhängig von der Ortsfrequenz f und dem Winkel β gemäß c(f,β) = cₜ(f) + (cᵣ(f) - cₜ(f)) · sin² β als Summe aus dem tangentialen Korrekturfunktionswert cₜ(f) und dem Produkt der Differenz des radialen und des tangentialen Korrekturfunktionswert cᵣ(f), cₜ(f) mit dem Quadrat des Sinus des Winkels β ergibt, womit man jeweils die winkelgerecht korrigierte Amplitude Acorr (f,β) = Ao(f,β) · c(f,β) durch Multiplikation der ursprünglichen Amplitude Ao(f,β) mit der Korrekturfunktion c(f,ß) erhält.

6. Verfahren nach Anspruch 1, **dadurch gekennzeichnet, daß** die MTF-Korrekturfunktion nach dem Ansatz k(f) - (1 + af)^{v} ; a, v > 0 bestimmt wird, wobei f die Ortsfrequenz ist und die Parameter a und v durch Anfitten an die MTF-Werte eines vorgegebenen Objektivs bestimmt werden oder frei geeignet gewählt werden.

7. Verfahren nach einem der vorstehenden Ansprüche, **dadurch gekennzeichnet, daß** die digitalisierten Bildelemente durch mehrere Ausgangsmatrizen A_{xy} verschiedener Farben-Intensitätswerte bestimmt sind, und diese getrennt entsprechend den einzelnen Farben zugehörigen Korrekturfunktionen korrigiert werden.

8. Verfahren nach Anspruch 7, **dadurch gekennzeichnet, daß** die korrigierten Farb-Intensitätswerte-Matrizen A'_{xy} entsprechend unterschiedlicher Farbabbildungsmaßstäbe einer diese korrigierenden radialen Streckung oder Stauchung bezüglich eines Bildkreismittelpunktes unterzogen werden.

9. Verfahren nach Anspruch 8, **dadurch gekennzeichnet, daß** die unterschiedlichen Farbabbildungsmaßstäbe aus Teilbereichen der korrigierten Matrizen A'_{xy} durch Bestimmung der Abweichung der radialen Lagen von tangentialen Kanten repräsentierenden Farbintensitätssprüngen in den verschiedenen Farbmatrizen zueinander und bezogen auf den Abstand des Teilbereiches zum Bildkreismittelpunkt jeweils ermittelt werden.

## Claims

1. Method for improving the definition of a digitised image whose picture elements are light intensity values stored organised into rows and columns as a starting matrix A_{xy}, with in each case a matrix window Aᵢⱼ of 2ⁿ times 2^{m} elements being enlarged to 2ⁿ⁺¹ times 2^{m+1} elements by reflection at two of its adjacent edges and at the corner thereby enclosed and said window being subjected to a Fourier transformation and the transformed matrix thus generated, Bᵢⱼ, 1 ≤ i ≤ 2ⁿ⁺¹, 1 ≤ j ≤ 2^{m+1} being converted by elementwise multiplication by an image distortion correction matrix Cᵢⱼ, all elements being real, into a corrected transformed matrix B'ᵢⱼ and the latter being transformed back into an intensity matrix A'ᵢⱼ a core window of which is adjusted, with centring, into a corrected intensity matrix A'_{xy} in accordance with the position of the matrix window Aᵢⱼ and then, in each case offset by an edge length of the core window, one matrix window after the other is processed in this manner until a complete corrected intensity matrix A'_{xy} is obtained, **characterised in that** the image distortion correction matrix is in each case determined in a location-dependent manner by determining a location-dependent image distortion correction matrix C_{xy} from an MTF correction function to suit given MTF variables of a lens system used to represent the digitised image and the local image distortion correction matrices Cᵢⱼ are in each case selected as a subset of the image distortion correction matrix C_{xy} in accordance with the position of the associated matrix window Aᵢⱼ with regard to the position of an image circle centre and to the distance and the tangential and radial angle of the matrix window edges to said centre.

2. Method according to claim 1, **characterised in that** the core window corresponds to a subset of (2ⁿ - k₁) times (2^{m} - k₂); 0 < k₁, k₂ < 2ⁿ, 2^{m} elements of the original matrix window Aᵢⱼ and thus the core windows are joined, with an edge length offset of 2ⁿ - k₁ or 2^{m} - k₂.

3. Method according to either of the preceding claims, **characterised in that** the core range has 2ⁿ⁻¹ times 2^{m-1} elements.

4. Method according to claim 1, **characterised in that** the MTF correction function is determined according to the statement c(f) = 1 + af^{b}; a, b > 0, where f is the local frequency and a and b are parameters which are fitted tangentially/radially so as to suit given MTF variables of a type of lens system, shutter setting, distance from the image circle centre and direction, with in each case the corrected amplitude Acorr(f) of a particular local frequency f being determined from the original amplitude Ao(f) by multiplying it by the correction function c(f).

5. Method according to claim 4, **characterised in that** as the MTF correction function c(f) with radial parameters aᵣ, bᵣ and tangential parameters aₜ, bₜ is determined from associated variables of the lens system for a matrix edge direction z which forms an angle β with the tangential direction t, and the correction function is given dependently on the local frequency f and the angle β in accordance with c(f,β) = cₜ(f) + (cᵣ(f) - cₜ(f)) • sine² β as the sum of the tangential correction function value cₜ(f) and the product of the differential between the radial and tangential correction function value cᵣ(f), cₜ(f) and the square of the sine of angle β, thus in each case giving the conformally corrected amplitude Acorr (f,β) = Ao(f,β) • c(f,β) by multiping the original amplitude Ao(f,β) by the correction function c(f,β).

6. Method according to claim 1, **characterised in that** the MTF correction function is determined according to the statement k(f) = (1 + af)^{v}; a, v > 0, where f is the local frequency and the parameters a and v are determined by fitting to the MTF values of a preset lens system or are freely selected in suitable manner.

7. Method according to any of the preceding claims, **characterised in that** the digitised picture elements are determined by a plurality of starting matrices A_{xy} of various colour intensity values, and these are separately corrected in accordance with correction functions associated with the individual colours.

8. Method according to claim 7, **characterised in that** with regard to an image circle centre the corrected colour intensity value matrices A'_{xy} are subjected in accordance with different colour representation scales to radial stretching or compression which corrects them.

9. Method according to claim 8, **characterised in that** the various colour representation scales are in each case ascertained from sub-ranges of the corrected matrices A'_{xy} by determining the deviation of the radial positions of tangential edges denoted by colour intensity jumps in the different colour matrices to one another, and are based on the distance of the sub-range to the image circle centre.

## Revendications

1. Procédé pour améliorer la netteté en profondeur d'images numérisées dont les éléments sont des grandeurs d'intensité lumineuse mémorisées, organisées en formes de rangées et de colonnes, en tant que matrice initiale A_{XY}, une portion de matrice Aᵢⱼ de 2ⁿ fois 2^{m} éléments étant agrandie par réflexion, sur deux de ses bords voisins ainsi que sur l'angle embrassé par ceux-ci, et soumis à une transformation de Fourier, et la matrice transformée Bᵢⱼ, 1 ≤ i ≤ 2ⁿ⁺¹, 1 ≤ j ≤ 2^{m+1}, ainsi obtenue, est transposée dans une matrice transformée B'ᵢⱼ, qui est corrigée dans le cadre d'une multiplication, élément par élément, avec une matrice de correction d'erreurs d'images Cᵢⱼ - tous les éléments étant des éléments réels - et cette matrice étant retransformée en une matrice d'intensité A'ᵢⱼ dont une portion centrale est centré dans une matrice d'intensité corrigée A'_{xy}, conformément à la position de la portion de matrice Aᵢⱼ, les portions de matrice, décalées chacune d'une longueur de bord de la portion centrale, étant traitées, l'une après l'autre, de cette manière, jusqu'à l'obtention d'une matrice d'intensi-té corrigée, complète A'_{xy},
**caractérisé en ce que**
la matrice de correction d'erreurs d'images est déterminée, chaque fois, en dépendance du lieu, une matrice de correction d'erreurs d'images, qui dépend du lieu C_{xy} , étant déterminée à partir d'une fonction de correction MTF (fonction de transfert de modulation) adaptée aux grandeurs MTF prédéfinies d'un objectif, qui est utilisé pour la représentation de l'image numérisée, et les matrices de correction d'erreurs d'image locales Cᵢⱼ étant sélectionnées, chacune, en tant que sous-ensembles de la matrice de correction d'erreurs d'image C_{xy}, conformément à la position de la portion de matrice afférente Aᵢⱼ, en ce qui concerne la position d'un point central du domaine de l'image, de la distance et de l'angle tangentiel et radial des bords de la portion de matrice par rapport à celui-ci.

2. Procédé selon la revendication 1,
**caractérisé en ce que**
la portion centrale correspond à un sous-ensemble de (2ⁿ - k₁) fois (2^{m} - k₂) ; 0 < k₁, k₂ < 2ⁿ, 2^{m} éléments de la portion de matrice initiale Aᵢⱼ, les portions centrales étant ainsi assemblées, décalées d'une longueur de bord de 2ⁿ - k₁ ou de 2^{m} - k₂.

3. Procédé selon l'une des revendications précédentes,
**caractérisé en ce que**
le domaine central comprend 2ⁿ⁻¹ fois 2^{m-1} éléments.

4. Procédé selon la revendication 1,
**caractérisé en ce que** la fonction de correction MTF est déterminée par la formule c(f) = 1 + af^{b}; a, b > 0, f représentant la fréquence de lieu et a et b étant des paramètres, qui sont adaptés tangentiellement / radialement, l'amplitude corrigée Acorr(f) d'une certaine fréquence de lieu f de l'amplitude initiale Ao(f) étant déterminée en multipliant par la fonction de correction c(f).

5. Procédé selon la revendication 4,
**caractérisé en ce que** la fonction de correction c(f) est déterminée par des paramètres radiaux a_{Γ}, b_{Γ} et des paramètres tangentiels aₜ, bₜ en provenance des grandeurs afférentes de l'objectif pour une direction de bords de matrice z qui forme un angle β avec la direction tangentielle t, la fonction de correction, en dépendance de la fréquence de lieu f et de l'angle β selon c(f,β) = cₜ + (cᵣ (f) - cₜ (f)) · sin² β, étant la somme qui résulte de la valeur de fonction de correction tangentielle cₜ (f) et du produit de la différence de la valeur de fonction de correction radiale et tangentielle c^{r}(f), cₜ (f) par le carré du sinus de l'angle β, de sorte que l'on obtient, chaque fois, l'amplitude corrigée conformément à l'angle.

6. Procédé selon la revendication 1,
**caractérisé en ce que**
la fonction de correction MTF est déterminée selon la formule k(f) = (1 + af)^{v}; a, v > 0, f, qui représente la fréquence de lieu, et les paramètres a et v étant déterminés par adaptation aux valeurs MTF d'un objectif prédéterminé ou sélectionné à volonté.

7. Procédé selon l'une des revendications précédentes,
**caractérisé en ce que**
les éléments de l'image numérisée sont déterminés par plusieurs matrices initiales A_{XY} de différentes valeurs d'intensité de couleur et que celles-ci sont corrigées selon les fonctions de correction afférant respectivement aux différentes couleurs.

8. Procédé selon la revendication 7,
**caractérisé en ce que**
les matrices de valeurs d'intensité de couleur corrigées A'_{XY} subissent, en fonction des différentes échelles de représentation de couleur, une expansion radiale ou une compression corrective par rapport à un point central du domaine d'image.

9. Procédé selon la revendication 8,
**caractérisé en ce que**
les différentes échelles de représentation de couleur, provenant de zones partielles des matrices corrigées A'_{XY}, sont respectivement déterminées par définition de la divergence des positions radiales de pics d'intensité de couleur représentant des bords tangentiels dans les différentes matrices de couleur par rapport les uns aux autres et en relation avec la distance de la zone partielle par rapport au centre du domaine de l'image.
